# EUROPEAN PATENT APPLICATION

(11) **EP 4 789 776 A1**
(43) Date of publication of application: **12.08.2026**
(21) Application number: 24874310.6
(22) Date of filing: 19.06.2024
(51) Int. Cl.: B05C 5/02

(54) **SLIT DIE HEAD AND COATING DEVICE EQUIPPED WITH SLIT DIE HEAD**

(30) Priority: 06.10.2023 JP 2023174538
(71) Applicant: Chugai Ro Co., Ltd., Osaka-shi Osaka 541-0046 (JP)
(72) Inventor: FUKUI, Shinya, Osaka-shi, Osaka 541-0046 (JP)
(74) Representative: GLAWE DELFS MOLL
(86) International application number: PCT/JP2024/022171
(87) International publication number: WO 2025/074693

(57) **Abstract**

Provided are a slit die head and a coating device that reduce thickness unevenness in a cross coating portion extending in a cross direction crossing a coating direction. A slit die head 20 configured to coat cross coating portions 71 and 74 extending in a cross direction B crossing a coating direction A by a coating liquid P discharged from a slit-shaped discharge port 24, the slit die head including: a storage portion 22 that is formed inside the slit die head 20 and stores the coating liquid P; and a roll 30 extending in the cross direction B, in which the roll 30 includes: a body portion 31 rotatably disposed in the storage portion 22; a cross groove 36 formed on a body surface 33 of the body portion 31 and extending in the cross direction B and having a shape corresponding to the cross coating portions 71 and 74; an introduction port 34 that is formed in the body surface 33 and introduces the coating liquid P stored in the storage portion 22; and a communication portion 35 communicating between the cross groove 36 and the introduction port 34.

## Description

### TECHNICAL FIELD

The present invention relates to a slit die head and a coating device including the slit die head, and more particularly to a coating device for coating a so-called "frame shape" coating pattern surrounded by a rectangular peripheral edge portion.

### BACKGROUND ART

A coating pattern in a frame shape includes a parallel coating portion extending in parallel with a coating direction, a cross coating portion extending in a cross direction crossing the coating direction, and a non-coating portion surrounded by the parallel coating portion and the cross coating portion. As a conventional technique for coating a coating pattern in a frame shape, for example, Patent Document 1 discloses that coating is performed by one-stroke using a dispenser. Coating using a dispenser has a problem that a coating thickness increases at a joint portion where a start point and an end point of one-stroke writing overlap and a film thickness becomes uneven.

Patent Document 2 discloses a coating nozzle provided with a coating liquid storage recess having a predetermined shape on an outer peripheral surface of a coating liquid supply body. Patent Document 3 discloses a coating device including a coating liquid receiving portion including a groove portion and a non-groove portion on an outer circumferential surface of a drum. That is, Patent Document 2 and Patent Document 3 disclose a slit die head including a roll having a groove engraved therein, the groove having a predetermined shape and temporarily storing a coating liquid.

### PRIOR ART DOCUMENTS

### PATENT DOCUMENTS

Patent Document 1: JP-A-2021-49500
Patent Document 2: JP-A-2021-98154
Patent Document 3: JP-A-2017-109151

### SUMMARY OF THE INVENTION

### PROBLEMS TO BE SOLVED BY THE INVENTION

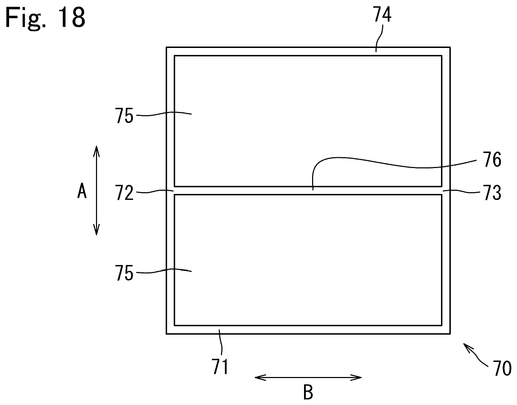

When a coating pattern 70 having a frame shape is coated on a substrate using a slit die head having a groove on an outer peripheral surface of a roll, for example, as shown in a cross section taken along line G-G in Fig. 18, a phenomenon of thickness unevenness in the cross direction in which the film thickness of the central portion is thinner than the film thickness of an end portion occurs in cross coating portions 71 and 74. Such thickness unevenness remarkably occurred when the width of the cross coating portions 71 and 74 was narrow, when coating was performed at a high speed, or when the viscosity of the coating liquid was high.

As a result of intensive studies on the above phenomenon, the inventors have found the following. That is, in cross grooves corresponding to the cross coating portions 71 and 74, since the coating liquid is indirectly supplied via parallel grooves corresponding to the parallel coating portions, the thickness unevenness in the cross direction occurs because the supply of the coating liquid cannot catch up at the central parts of the cross coating portions 71 and 74.

Therefore, an object of the present invention is to provide a slit die head and a coating device that reduce thickness unevenness in a cross direction in a cross coating portion.

### SOLUTIONS TO THE PROBLEMS

In order to solve the above problems, a slit die head according to one aspect of the present invention is
a slit die head configured to coat a cross coating portion extending in a cross direction crossing a coating direction by a coating liquid discharged from a slit-shaped discharge port, the slit die head including:
a storage portion that is formed inside the slit die head and stores the coating liquid; and
a roll extending in the cross direction, in which
the roll includes:
   a body portion rotatably disposed in the storage portion;
   a cross groove formed on a body surface of the body portion and extending in the cross direction and having a shape corresponding to the cross coating portion;
   an introduction port that is formed on the body surface and introduces the coating liquid stored in the storage portion; and
   a communication portion communicating between the cross groove and the introduction port.

### EFFECTS OF THE INVENTION

According to the present invention, since the coating liquid stored in the storage portion is directly and smoothly supplied to the cross groove formed on the body surface of the roll through the communication portion, the thickness unevenness in the cross direction at the cross coating portion can be reduced.

### BRIEF DESCRIPTION OF THE DRAWINGS

[Fig. 1] Fig. 1 is a diagram for schematically explaining a coating device including a slit die head according to a first embodiment.
[Fig. 2] Fig. 2 is a diagram for explaining a roll in the slit die head shown in Fig. 1.
[Fig. 3] Fig. 3 is a developed view of a body surface of the roll shown in Fig. 2.
[Fig. 4] Fig. 4 is a diagram schematically showing a side cross section of a central portion of the roll shown in Fig. 2.
[Fig. 5] Fig. 5 is a diagram for explaining a shim plate in the slit die head shown in Fig. 1.
[Fig. 6] Fig. 6 is an enlarged view of a main part of the shim plate shown in Fig. 5.
[Fig. 7] Fig. 7 is a diagram of the shim plate shown in Fig. 6 as viewed in a direction of arrows VII-VII.
[Fig. 8] Fig. 8 is a diagram for explaining coating of a cross coating portion by the slit die head shown in Fig. 1.
[Fig. 9] Fig. 9 is a diagram for explaining coating of a parallel coating portion by the slit die head shown in Fig. 1.
[Fig. 10] Fig. 10 is a diagram for explaining a coating pattern having a shape of the katakana 'ro'.
[Fig. 11] Fig. 11 is a cross-sectional view schematically showing a slit die head according to a second embodiment.
[Fig. 12] Fig. 12 is a developed view of a body surface of a roll in a slit die head according to a third embodiment.
[Fig. 13] Fig. 13 is a diagram schematically showing a side cross section of a central portion of a roll corresponding to Fig. 12.
[Fig. 14] Fig. 14 is a developed view of a body surface of a roll in a slit die head according to a fourth embodiment.
[Fig. 15] Fig. 15 is a diagram schematically showing a side cross section of a central portion of a roll corresponding to Fig. 14.
[Fig. 16] Fig. 16 is a developed view of a body surface of a roll in a slit die head according to a fifth embodiment.
[Fig. 17] Fig. 17 is a diagram schematically showing a side cross section of a central portion of a roll corresponding to Fig. 16.
[Fig. 18] Fig. 18 is a diagram for explaining a coating pattern having a shape of the kanji 'hi' according to Modified Example 1.
[Fig. 19] Fig. 19 is a diagram for explaining a coating pattern having a shape of the kanji 'ta' according to Modified Example 2.
[Fig. 20] Fig. 20 is a developed view of a body surface of a roll in a slit die head corresponding to the coating pattern having a shape of the kanji 'ta' shown in Fig. 19.
[Fig. 21] Fig. 21 is a diagram for schematically explaining a slit die head according to Modified Example 3.
[Fig. 22] Fig. 22 is a bottom view of the slit die head shown in Fig. 21.
[Fig. 23] Fig. 23 is a diagram for schematically explaining a coating device according to Modified Example 4.

### DETAILED DESCRIPTION

Hereinafter, embodiments of a slit die head 20 and a coating device 1 according to the present invention will be described with reference to the drawings. In the following description, terms (terms including, for example, "upper", "lower", "right", "left", "front", and "rear") indicating specific directions or positions are used as necessary, but the use of these terms is to facilitate understanding of the present disclosure with reference to the drawings, and the technical scope of the present disclosure is not limited by the meanings of these terms. In addition, dimensions, materials, shapes, relative arrangements, and the like of the components described in the following embodiments are not intended to limit the scope of the present invention only to them unless otherwise specified.

### [Overall Configuration of Coating Device]

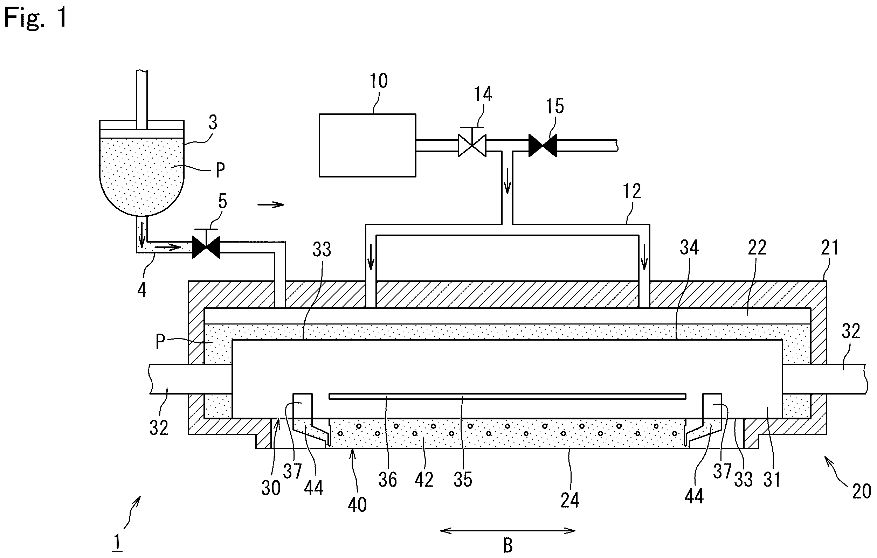

Fig. 1 is a diagram for schematically explaining a coating device 1 including a slit die head 20 according to a first embodiment. The overall configuration of the coating device 1 will be described with reference to Fig. 1. In Fig. 1, a state in which the valve is opened is indicated by white, and a state in which the valve is closed is indicated by black.

As shown in Fig. 1, the coating device 1 includes a coating liquid supply device 3 and a slit die head 20. The coating liquid supply device 3 is connected to the slit die head 20 via a coating liquid pipe 4. When a coating liquid stored in a storage portion 22 decreases, a coating liquid supply valve 5 is opened to supply a coating liquid P stored in the coating liquid supply device 3 to the slit die head 20. At this time, air in the storage portion 22 is discharged by closing a gas supply adjusting valve 14 and opening a gas release valve 15. The coating liquid P is a generic term for liquid substances having fluidity, such as a water-like liquid, a paste-like high-viscosity liquid substance, and a high-concentration slurry substance.

The slit die head 20 includes a die 21, a roll 30, and a shim plate 40. The die 21 includes a first die 21a and a second die 21b that can be divided into two along a cross direction B crossing a coating direction A. A shim plate 40 is configured to be sandwiched between the first die 21a and the second die 21b. The die 21 has the storage portion 22 in its internal space, and the coating liquid P supplied from the coating liquid supply device 3 is stored in the storage portion 22. The roll 30 is disposed in the storage portion 22 such that the roll 30 is immersed in the coating liquid P stored in the storage portion 22.

The gas pipe 12 is connected to the upper portion of the die 21, and the gas supply regulating valve 14 and the gas release valve 15 are disposed in the gas pipe 12. When the gas supply regulating valve 14 is opened and the coating liquid supply valve 5 and the gas release valve 15 are closed, air pressurized by the gas supply device 10 is supplied. The coating liquid P stored in the storage portion 22 is pressurized by the pressurized air. The coating liquid P filled in a coating groove is discharged from a slit-shaped discharge port 24 through the shim plate 40. At this time, the air in the storage portion 22 is discharged by closing the gas supply regulating valve 14 and opening the gas release valve 15.

### [First Embodiment]

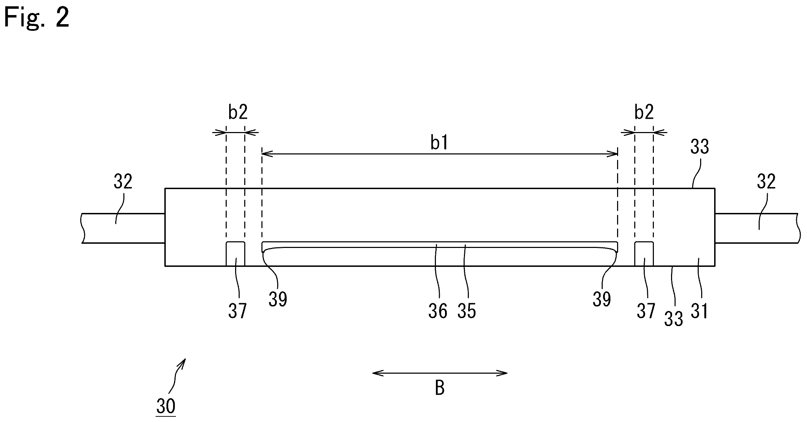

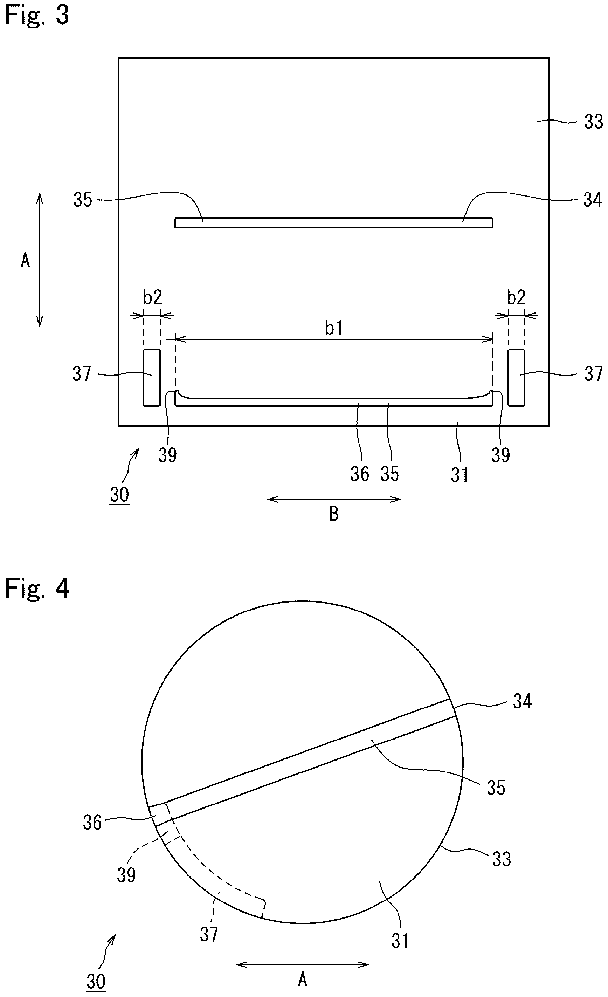

Next, the slit die head 20 according to the first embodiment will be described with reference to Figs. 2 to 4. Fig. 2 is a diagram for explaining the roll 30 in the slit die head 20 shown in Fig. 1. Fig. 3 is a developed view of a body surface 33 of the roll 30 shown in Fig. 2. Fig. 4 is a diagram schematically showing a side cross section of a central portion of the roll 30 shown in Fig. 2.

As shown in Fig. 2, the roll 30 includes, for example, a cylindrical body portion 31 and a shaft portion 32. The body portion 31 and the shaft portion 32 have a cylindrical shape or a hollow cylindrical shape, and extend in the cross direction B crossing the coating direction A. The cross direction B crosses perpendicularly to the coating direction A, for example. The body portion 31 is in sliding contact with the bottom portion of the storage portion 22. The shaft portion 32 extends from each of the left end portion and the right end portion of the body portion 31. Each shaft portion 32 is rotatably supported by the left side portion and the right side portion of the die 21.

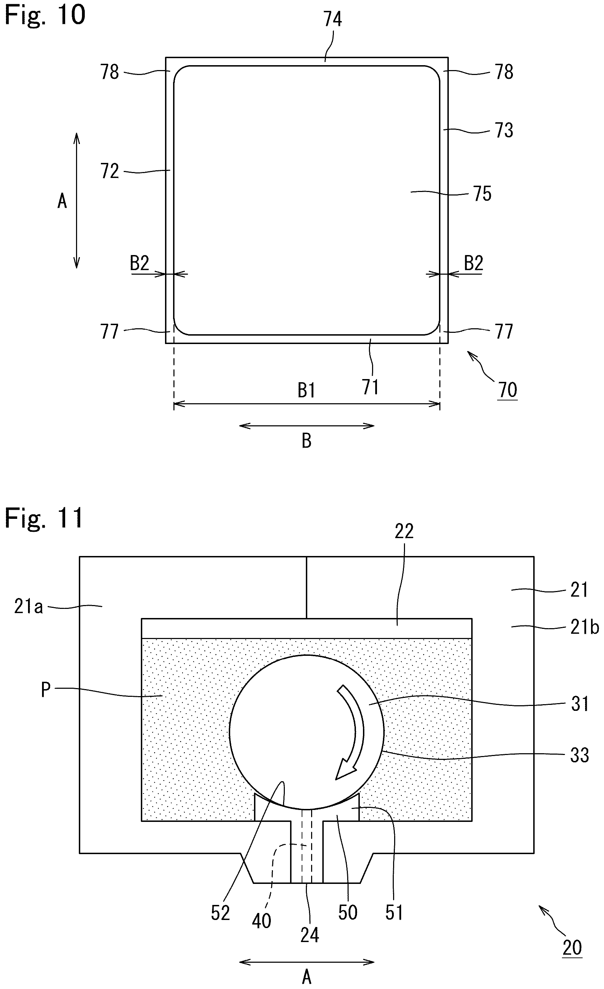

As shown in Figs. 2 to 4, a cross groove 36 and a pair of left and right parallel grooves 37 and 37 are engraved at a predetermined depth on the body surface 33 of the body portion 31. The cross groove 36 has a substantially rectangular shape extending with a first cross length b1 in the cross direction B. For example, a protruding groove 39 is formed at an end portion of the cross groove 36. The protruding groove 39 has, for example, a shape protruding in an arc shape from the central portion toward the end portion in order to form a curved surface on the inner periphery as in the coating pattern 70 shown in Fig. 10. The parallel groove 37 has a rectangular shape extending with a first parallel length b2 in the cross direction B and extending in the coating direction A. A side edge of the cross groove 36 and side edges of the pair of left and right parallel grooves 37 and 37 are separated by a predetermined distance. As a result, it is possible to prevent unnecessary coating from being performed on a non-coating portion 75 in the coating pattern 70 shown in Fig. 10.

As shown in Figs. 3 and 4, an introduction port 34 is formed at a position opposite to the cross groove 36 and symmetric by 180 degrees. The introduction port 34 has a rectangular shape corresponding to the cross groove 36. The body portion 31 has a communication portion 35 linearly extending in the radial direction and penetrating the body portion 31. As a result, the pressure loss in the cross groove 36 can be reduced. The communication portion 35 has a rectangular shape corresponding to the introduction port 34 and the cross groove 36. Therefore, the introduction port 34 and the cross groove 36 communicate with each other by the communication portion 35 formed inside the body portion 31.

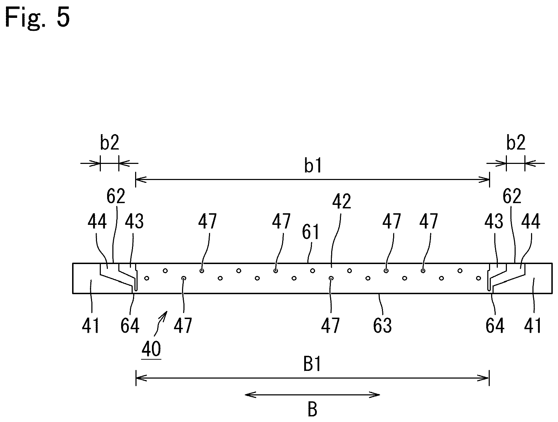

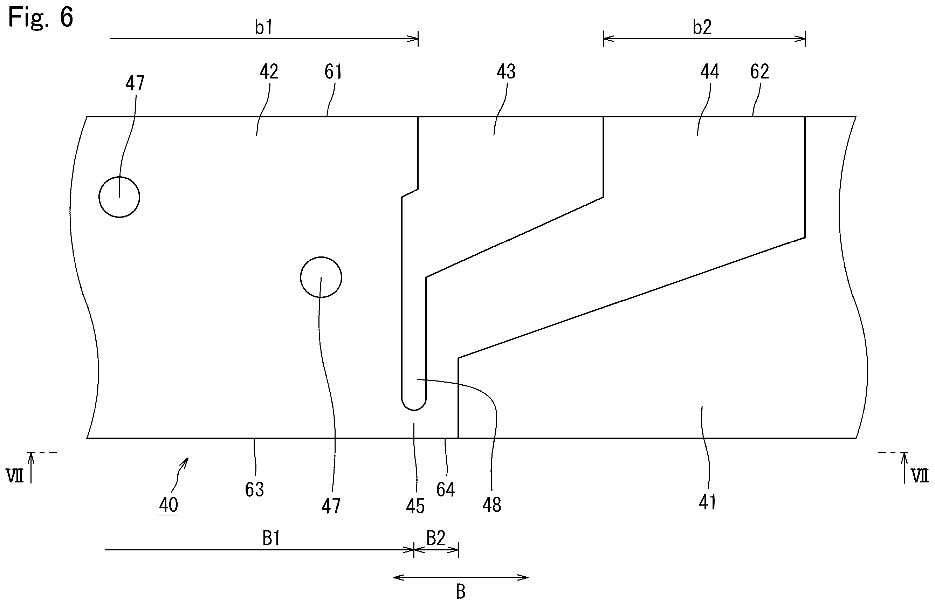

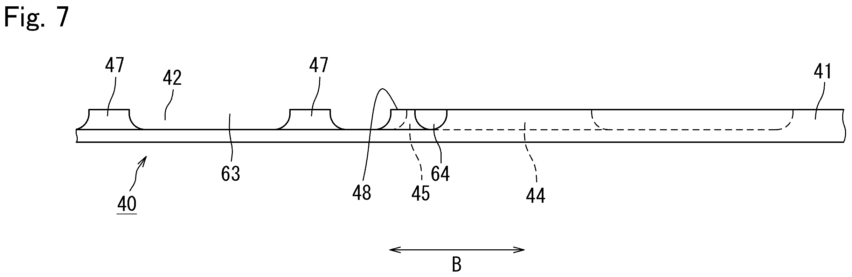

Fig. 5 is a diagram for explaining the shim plate 40 in the slit die head 20 shown in Fig. 1. Fig. 6 is an enlarged view of a main part of the shim plate 40 shown in Fig. 5. Fig. 7 is a diagram of the shim plate 40 shown in Fig. 6 as viewed in a direction of arrows VII-VII.

As shown in Fig. 5, the shim plate 40 is a straightening plate that includes a plate-shaped body 41, a cross groove flow path 42, and parallel groove flow paths 44 and controls the flow of the coating liquid P in the cross direction B. The plate-shaped body 41 has a substantially rectangular shape extending in the cross direction B. The shim plate 40 is disposed at the discharge port 24 formed on the downstream side of the die 21, and is sandwiched between the first die 21a and the second die 21b of the die 21.

As shown in Figs. 6 and 7, the cross groove flow path 42 and the left and right parallel groove flow paths 44 are recessed on one surface side of the plate-shaped body 41. A first cross groove opening 61 having the first cross length b1 corresponding to the cross groove 36 is formed on the upstream side of the cross groove flow path 42. On the downstream side of the cross groove flow path 42, a second cross groove opening 63 having a second cross length B1 corresponding to cross coating portions 71 and 74 (shown in Fig. 10) is formed. A first parallel groove opening 62 having the first parallel length b2 corresponding to the parallel groove 37 is formed on the upstream side of the parallel groove flow path 44. On the downstream side of the parallel groove flow path 44, a second parallel groove opening 64 having a second parallel length B2 corresponding to parallel coating portions 72 and 73 (shown in Fig. 10) is formed.

The cross groove flow path 42 and the parallel groove flow path 44 are separated by a partition wall 43. The partition wall 43 has a merging restricting portion 48 on the downstream side thereof. A merging portion 45 is formed between the downstream end portion of the plate-shaped body 41 and the tip of the merging restricting portion 48. At the merging portion 45, the cross groove flow path 42 and the parallel groove flow path 44 are connected to each other, so that the coating liquid P from the cross groove flow path 42 and the coating liquid P from the parallel groove flow path 44 merge. As a result, the end portions of the cross coating portions 71 and 74 can be connected to the end portions of the parallel coating portions 72 and 73. The height of the merging portion 45 is within 30% of the height of the shim plate 40. This ensures the merging of the coating liquid P at the merging portion 45, and prevents the coating liquid P from the cross groove flow path 42 and the coating liquid P from the parallel groove flow path 44 from interfering until reaching the merging portion 45.

In the cross groove flow path 42, a plurality of gap holding portions 47 protruding in the thickness direction from the other surface side to the one surface side of the plate-shaped body 41 are dispersedly formed. As a result, when the shim plate 40 is sandwiched between the first die 21a and the second die 21b of the die 21, deformation of the shim plate 40 in the cross groove flow path 42 is suppressed, and the coating widths of the cross coating portions 71 and 74 in the coating direction A become appropriate. The partition wall 43 and the gap holding portion 47 are configured to be flush with one surface side of the plate-shaped body 41, for example.

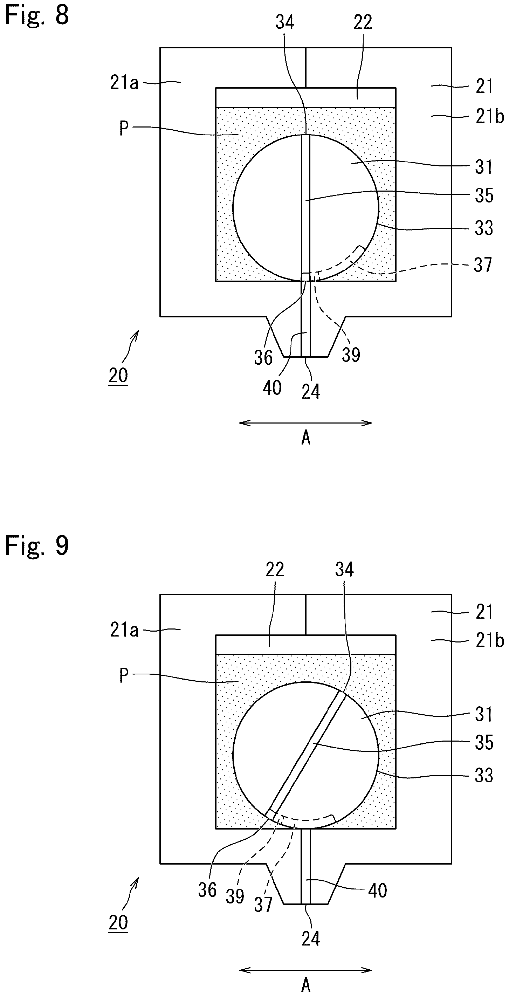

Fig. 8 is a diagram for explaining coating of the cross coating portions 71 and 74 by the slit die head 20 shown in Fig. 1. Fig. 9 is a diagram for explaining coating of the parallel coating portions 72 and 73 by the slit die head 20 shown in Fig. 1. Fig. 10 is a diagram for explaining the coating pattern 70 having a frame shape.

As shown in Fig. 10, the coating pattern 70 coated on a surface of an object to be coated (not shown) has a frame shape defined by the front cross coating portion 71 and the rear cross coating portion 74 extending in the cross direction B, and the left parallel coating portion 72 and the right parallel coating portion 73 extending in the coating direction A. The front cross coating portion 71 and the rear cross coating portion 74 extend by the second cross length B1 in the cross direction B. The left parallel coating portion 72 and the right parallel coating portion 73 extend in the cross direction B by the second parallel length B2. The coating pattern 70 has the non-coating portion 75 in an inner portion thereof. The non-coating portion 75 is a portion to which the coating liquid P is not coated. The corner of the inner peripheral portion of the coating pattern 70 shown in Fig. 10 has a shape rounded by an R surface corresponding to the protruding groove 39 of the cross groove 36. When the cross groove 36 has a simple rectangular shape, the corner of the inner peripheral portion of the coating pattern 70 has a shape of a sharp pin angle (corner not chamfered).

As shown in Fig. 8, the body portion 31 of the roll 30 is disposed so as to be sufficiently immersed in the coating liquid P stored in the storage portion 22. When the pressurized air is supplied, the coating liquid P stored in the storage portion 22 is pressurized by the pressurized air. The pressurized coating liquid P is directly and smoothly supplied to the cross groove 36 through the introduction port 34 and the communication portion 35, and is filled in the cross groove 36. The coating liquid P filled in the cross groove 36 is discharged from the slit-shaped discharge port 24 through the shim plate 40. As a result, the front cross coating portion 71 (cross coating portion) shown in Fig. 10 is coated on the surface of the object to be coated (not shown). The coating liquid P is replenished to the cross groove 36 through the introduction port 34 and the communication portion 35. At this time, the storage amount of the coating liquid P in the storage portion 22 is controlled such that the liquid level of the coating liquid P in the storage portion 22 is located above the height of the roll 30.

As shown in Fig. 8, in a state where the body portion 31 is immersed in the coating liquid P, the coating liquid P around the pair of left and right parallel grooves 37 and 37 faces the pair of left and right parallel grooves 37 and 37. Therefore, the coating liquid P is easily and smoothly supplied to the pair of left and right parallel grooves 37 and 37. As shown in Fig. 9, by rotating the roll 30 and conveying an object to be coated (not shown) in the coating direction A, substantially half of the left parallel coating portion 72 and the right parallel coating portion 73 (parallel coating portions) shown in Fig. 10 are coated on the surface of the object to be coated (not shown).

When the object to be coated (not shown) reaches a half position of the entire length of the left parallel coating portion 72 and the right parallel coating portion 73 (parallel coating portions), the roll 30 is rotated in the opposite direction and the object to be coated (not shown) is conveyed in the coating direction A, so that the left parallel coating portion 72 and the right parallel coating portion 73 (parallel coating portions) shown in Fig. 10 are coated on the surface of the object to be coated (not shown). The rotation of the roll 30 is controlled so as to further rotate in the opposite direction and return to the state shown in Fig. 8. As a result, the rear cross coating portion 74 (cross coating portion) of the coating pattern 70 shown in Fig. 10 is coated on the object to be coated (not shown). By such a series of operations, the formation of the coating pattern 70 having a frame shape shown in Fig. 10 is completed.

Therefore, since the coating liquid P stored in the storage portion 22 is directly and smoothly supplied to the cross groove 36 formed on the body surface 33 of the roll 30 through the communication portion 35, the thickness unevenness in the cross coating portions 71 and 74 can be reduced.

### [Second Embodiment]

A slit die head 20 according to a second embodiment will be described with reference to Fig. 11. Fig. 11 is a cross-sectional view schematically showing the slit die head 20 according to the second embodiment.

As shown in Fig. 11, a seal shim 50 is disposed at the bottom portion of the storage portion 22 of the slit die head 20. Differences from the slit die head 20 according to the first embodiment described above will be mainly described.

The seal shim 50 has elasticity and is made of, for example, rubber or elastomer. The seal shim 50 has a seal portion 51 at its upstream portion. The upper surface of the seal portion 51 has a curved sliding contact surface 52. The radius of curvature of the sliding contact surface 52 is the same as or larger than the radius of curvature of the body portion 31 of the roll 30. The body surface 33 of the body portion 31 is configured to be in sliding contact with the sliding contact surface 52. The curved sliding contact surface 52 improves the close contact sealing property of the body portion 31 with respect to the body surface 33. Therefore, since the seal shim 50 has a shim function and a seal function, it is possible to reliably prevent the coating liquid P from flowing out from a portion other than the cross groove 36 and the parallel groove 37, to suppress deformation of the coating pattern 70, and to prevent the coating liquid P from adhering to the non-coating portion 75.

### [Third Embodiment]

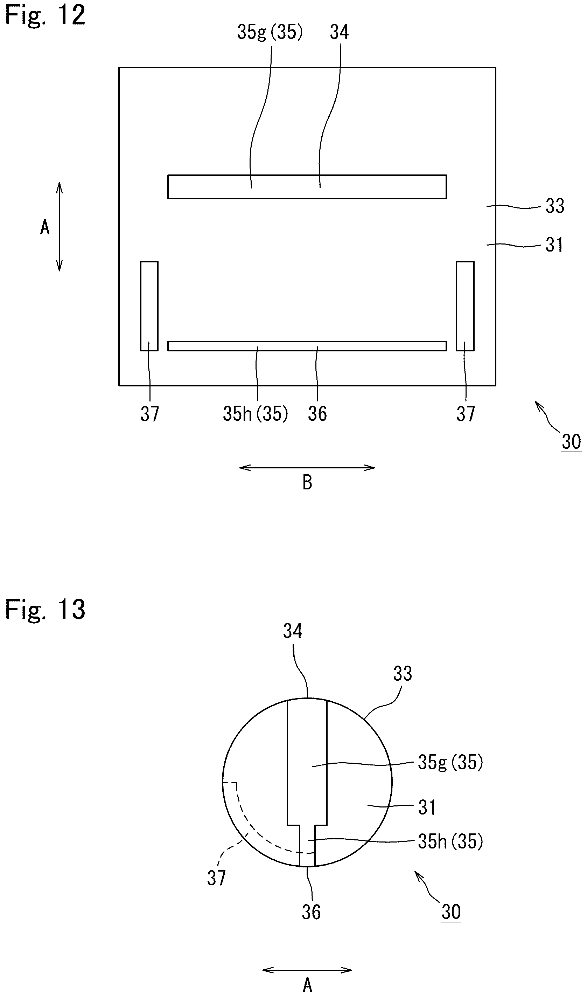

A slit die head 20 according to a third embodiment will be described with reference to Figs. 12 and 13. Fig. 12 is a developed view of a body surface 33 of a roll 30 in a slit die head 20 according to the third embodiment. Fig. 13 is a diagram schematically showing a side cross section of the central portion of the roll 30 corresponding to Fig. 12.

As shown in Figs. 12 and 13, the communication portion 35 communicating the introduction port 34 and the cross groove 36 includes a wide communication portion 35g and a narrow communication portion 35h. Differences from the slit die head 20 according to the first embodiment described above will be mainly described.

The introduction port 34 is configured to be wider than the cross groove 36 in the circumferential direction of the body portion 31. The wide communication portion 35g is a rectangular through hole having a width and a length corresponding to the circumferential width and the axial length of the introduction port 34. The narrow communication portion 35h is a rectangular through hole having a width and a length corresponding to the circumferential width and the axial length of the cross groove 36. The boundary between the wide communication portion 35g and the narrow communication portion 35h is located closer to the narrow communication portion 35h. At the boundary, there is a step shape in which the width in the coating direction A changes steeply, but there may be a shape in which the width in the coating direction A changes gently.

When the narrow cross coating portions 71 and 74 are coated, the cross groove 36 is formed to be narrow, but if the introduction port 34 is also formed to be narrow, it is difficult to introduce the coating liquid P. Therefore, when the introduction port 34 is configured to be wide, the pressure loss in the communication portion 35 is reduced, so that the supply of the coating liquid P becomes easy and smooth. Therefore, the introduction port 34 is configured to be wider than the cross groove 36, and the wide communication portion 35g is configured to be wider than the narrow communication portion 35h. As a result, even when the narrow cross coating portions 71 and 74 are coated, the coating liquid P can be easily and smoothly supplied to the communication portion 35. Further, the longitudinal direction (cross direction B) length of the communication portion 35 may be configured to be longer than the longitudinal direction (cross direction B) length of the cross groove 36. As a result, the pressure loss in the communication portion 35 is reduced, so that the supply of the coating liquid P becomes easy and smooth.

### [Fourth Embodiment]

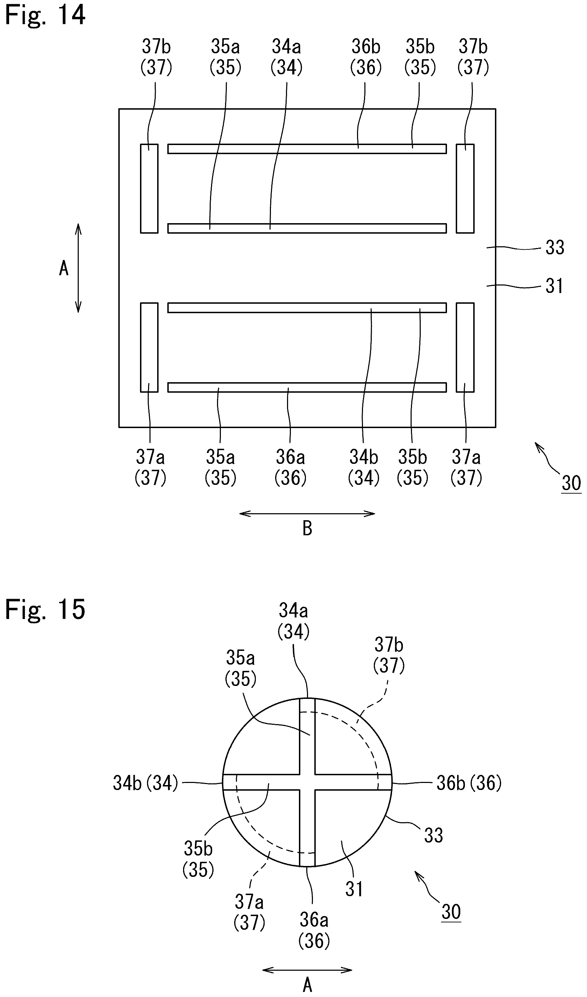

A slit die head 20 according to a fourth embodiment will be described with reference to Figs. 14 and 15. Fig. 14 is a developed view of a body surface 33 of a roll 30 in the slit die head 20 according to the fourth embodiment. Fig. 15 is a diagram schematically showing a side cross section of the central portion of the roll 30 corresponding to Fig. 14.

As shown in Figs. 14 and 15, the first communication portion 35a and the second communication portion 35b cross each other in the radial direction inside the body portion 31. Differences from the slit die head 20 according to the first embodiment described above will be mainly described.

On the body surface 33 of the body portion 31, a first cross groove 36a and a pair of left and right first parallel grooves 37a and 37a, and a second cross groove 36b and a pair of left and right second parallel grooves 37b and 37b are engraved at a predetermined depth.

On the opposite side of a first engraving group and at the position symmetric by 180 degrees, as a second engraving group, a first introduction port 34a and a pair of left and right second parallel grooves 37b and 37b, and a second cross groove 36b and a pair of left and right second parallel grooves 37b and 37b are engraved at a predetermined depth.

The first introduction port 34a is disposed at a position opposite to the first cross groove 36a and symmetric by 180 degrees. The first introduction port 34a and the first cross groove 36a have rectangular shapes of the same size, and are communicated by the first communication portion 35a. Therefore, the first communication portion 35a is a through hole extending linearly in the radial direction and penetrating the body portion 31. The second introduction port 34b is disposed at a position opposite to the second cross groove 36b and symmetric by 180 degrees. The second introduction port 34b and the second cross groove 36b have rectangular shapes of the same size, and are communicated by the second communication portion 35b. Therefore, the second communication portion 35b is a through hole extending linearly in the radial direction and penetrating the body portion 31. The first communication portion 35a and the second communication portion 35b perpendicularly cross each other in the radial direction inside the body portion 31. The first cross groove 36a and the first introduction port 34a have a function of complementarily cooperating with each other, and the second cross groove 36b and the second introduction port 34b also have a function of complementarily cooperating with each other.

When the roll 30 makes one rotation, two coating patterns 70, that is, a first coating pattern formed by the first cross groove 36a, the pair of left and right first parallel grooves 37a and 37a, and the second introduction port 34b, and a second coating pattern formed by the first introduction port 34a, the pair of left and right second parallel grooves 37b and 37b, and the second cross groove 36b are formed on a surface of an object to be coated. As a result, the operation of reversing the roll 30 becomes unnecessary, the coating operation can be simplified, and the same coating pattern 70 can be continuously and repeatedly coated while conveying the long film as the object to be coated.

### [Fifth Embodiment]

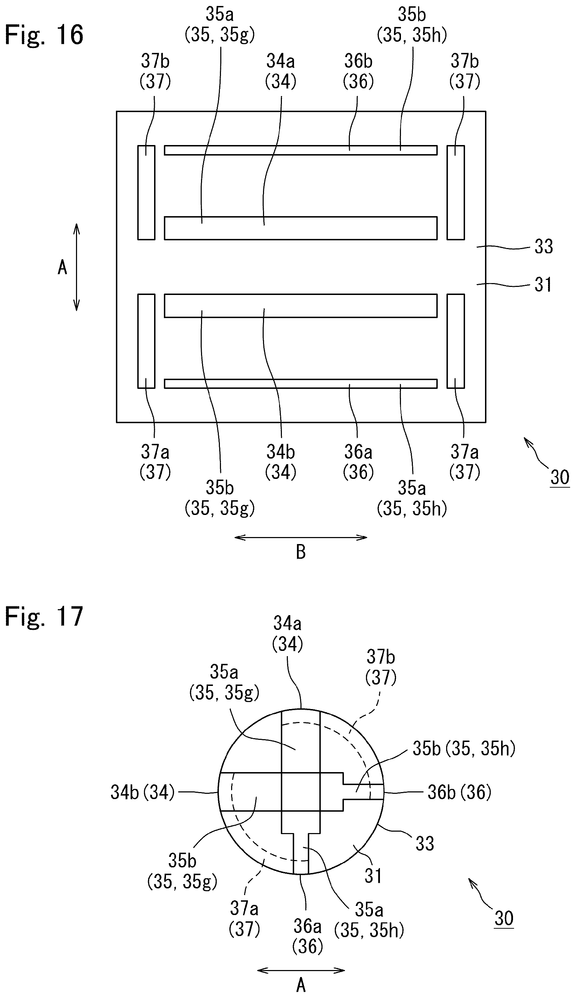

A slit die head 20 according to a fifth embodiment will be described with reference to Figs. 16 and 17. Fig. 16 is a developed view of the body surface 33 of the roll 30 in the slit die head 20 according to the fifth embodiment. Fig. 17 is a diagram schematically showing a side cross section of the central portion of the roll 30 corresponding to Fig. 16.

As shown in Figs. 16 and 17, in the first communication portion 35a and the second communication portion 35b crossing each other in the radial direction inside the body portion 31, the introduction port 34 side is wider than the cross coating portion 36 side. The fifth embodiment corresponds to an aspect of a combination of the third embodiment and the fourth embodiment described above.

On the body surface 33 of the body portion 31, a first cross groove 36a and a pair of left and right first parallel grooves 37a and 37a, and a second cross groove 36b and a pair of left and right second parallel grooves 37b and 37b are engraved at a predetermined depth.

The first introduction port 34a is disposed at a position opposite to the first cross groove 36a and symmetric by 180 degrees. The first introduction port 34a and the first cross groove 36a have a rectangular shape, and are communicated by the first communication portion 35a. The first communication portion 35a is a through hole having a wide communication portion 35g and a narrow communication portion 35h and linearly extending in the radial direction and penetrating the body portion 31. The wide communication portion 35g of the first communication portion 35a is a rectangular through hole having a width and a length corresponding to the circumferential width and the axial length of the first introduction port 34a. The narrow communication portion 35h of the first communication portion 35a is a rectangular through hole having a width and a length corresponding to the circumferential width and the axial length of the first cross groove 36a.

The second introduction port 34b is disposed at a position opposite to the second cross groove 36b and symmetric by 180 degrees. The second introduction port 34b and the second cross groove 36b have a rectangular shape, and are communicated by the second communication portion 35b. The second communication portion 35b is a through hole having a wide communication portion 35g and a narrow communication portion 35h and linearly extending in the radial direction and penetrating the body portion 31. The wide communication portion 35g of the second communication portion 35b is a rectangular through hole having a width and a length corresponding to the circumferential width and the axial length of the second introduction port 34b. The narrow communication portion 35h of the second communication portion 35b is a rectangular through hole having a width and a length corresponding to the circumferential width and the axial length of the second cross groove 36b.

### [Modified Example 1]

With reference to Fig. 18, a coating pattern 70 having a shape of the kanji 'hi' according to Modified Example 1 will be described.

As shown in Fig. 18, the coating pattern 70 has a shape of the kanji 'hi' defined by a front cross coating portion 71, an intermediate cross coating portion 76, and a rear cross coating portion 74 extending in the cross direction B, and a left parallel coating portion 72 and a right parallel coating portion 73 extending in the coating direction A. The coating pattern 70 has two non-coating portions 75 in an inner portion thereof.

The coating pattern 70 shown in Fig. 18 is formed by a process in which the front cross coating portion 71 is coated, substantially half of the left parallel coating portion 72 and the right parallel coating portion 73 are coated, the intermediate cross coating portion 76 is coated, the remaining half of the left parallel coating portion 72 and the right parallel coating portion 73 are coated, and the rear cross coating portion 74 is coated.

### [Modified Example 2]

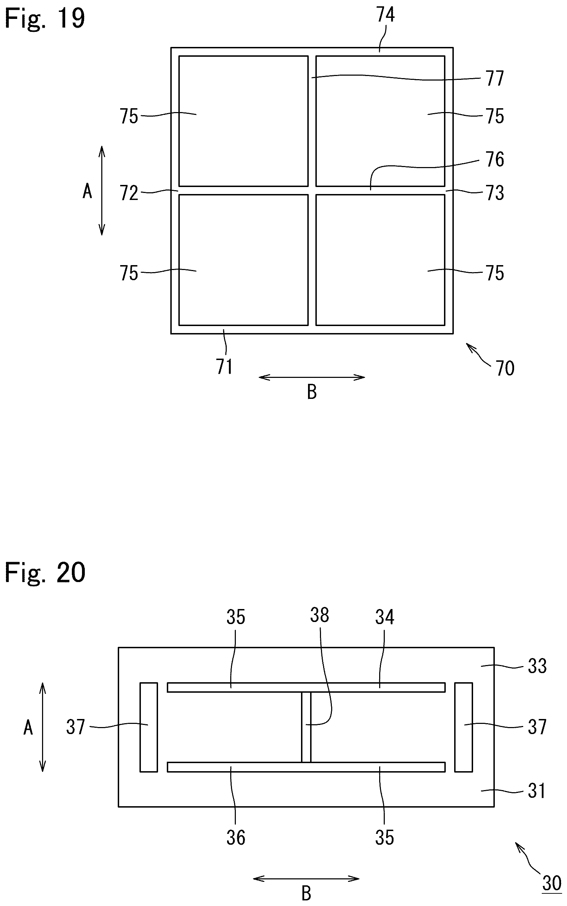

With reference to Figs. 19 and 20, a coating pattern 70 having a shape of the kanji 'ta' according to Modified Example 2 will be described.

As shown in Fig. 19, the coating pattern 70 has a shape of the kanji 'ta' defined by a front cross coating portion 71, an intermediate cross coating portion 76, and a rear cross coating portion 74 extending in the cross direction B, and a left parallel coating portion 72, an intermediate parallel coating portion 77, and a right parallel coating portion 73 extending in the coating direction A. The coating pattern 70 has four non-coating portions 75 in an inner portion thereof.

The coating pattern 70 shown in Fig. 19 is formed using, for example, the roll 30 in the slit die head 20 shown in Fig. 20. The cross groove 36, the pair of left and right parallel grooves 37 and 37, and the intermediate parallel groove 38 are engraved at a predetermined depth on the body surface 33 of the roll 30. The introduction port 34 is disposed at a position opposite to the cross groove 36 and symmetric by 180 degrees. The introduction port 34 and the cross groove 36 have rectangular shapes of the same size, and are communicated by the communication portion 35. Therefore, the communication portion 35 is a through hole extending linearly in the radial direction and penetrating the body portion 31.

When the roll 30 rotates substantially half a turn, half of the coating is performed by the cross groove 36, the pair of left and right parallel grooves 37 and 37, the intermediate parallel groove 38, and the introduction port 34, and when the roll 30 rotates in the reverse direction, the remaining coating is performed by the pair of left and right parallel grooves 37 and 37 and the cross groove 36. As a result, the coating pattern 70 having a shape of the kanji 'ta' shown in Fig. 19 is formed.

### [Modified Example 3]

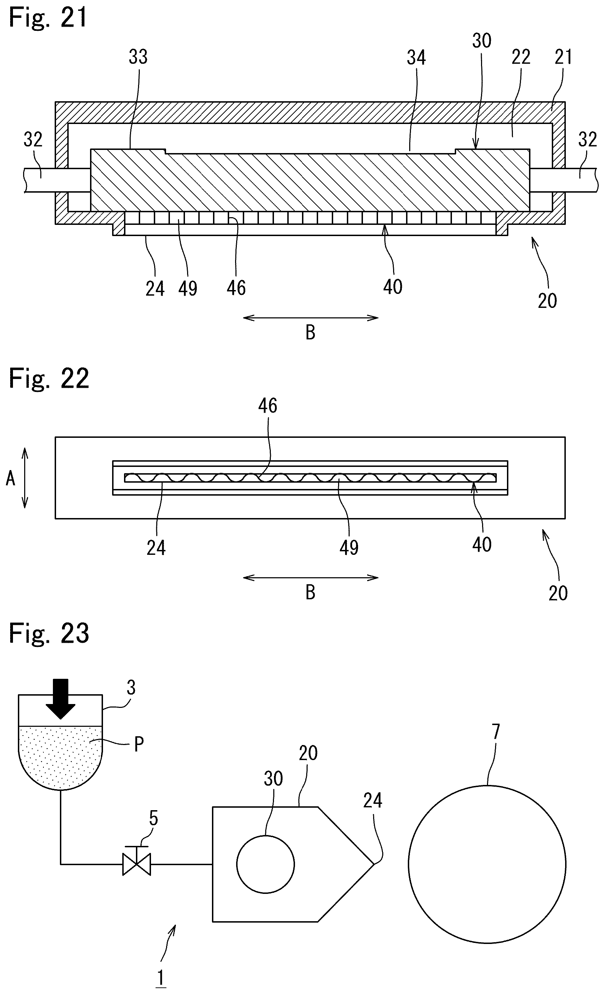

A slit die head 20 according to Modified Example 3 will be described with reference to Figs. 21 and 22.

As shown in Figs. 21 and 22, a shim plate 40 of the slit die head 20 has a partition portion 46. The partition portion 46 has various shapes such as a comb tooth shape, a zigzag shape, and a wave shape, and extends along the cross direction B. The partition portion 46 has a function of separating the discharge port 24 into the plurality of discharge flow paths 49 in the cross direction B, and prevents interference between the adjacent discharge flow paths 49.

### [Modified Example 4]

A coating device 1 according to Modified Example 4 will be described with reference to Fig. 23.

As shown in Fig. 23, the coating device 1 can also be applied to a roll-to-roll type coating device that performs continuous coating by winding a roll-shaped object to be coated (not shown) such as paper, a film, or foil around a back roll 7 and extruding the coating liquid P from the discharge port 24 of the slit die head 20.

Although specific embodiments of the present invention have been described, the present invention is not limited to the above embodiments, and various modifications can be made within the scope of the present invention.

Although the present invention is not limited, for example, a remarkable effect is exhibited in each of the case of high-speed coating at a coating speed of 5 m/min or more, the case of high-viscosity coating at which the viscosity of the coating liquid P is 1000cps or more, and the case of narrow coating at which the widths of the cross coating portions 71 and 74 are 10 mm or less. Further, when the widths of the cross coating portions 71 and 74 are 3 mm to 5 mm, a more remarkable effect is obtained.

In the above embodiment, the aspect in which the coating pattern 70 having a shape of the katakana 'ro' including the two cross coating portions 71 and 74 and the two parallel coating portions 72 and 73 is coated has been described, but the present invention can also be applied to an aspect in which the coating pattern 70 having a stripe shape in which a plurality of cross coating portions 71 and 74 are arranged in parallel to be spaced apart in the coating direction A is coated.

In the above embodiment, the aspect in which the communication portion 35 linearly extends in the radial direction inside the body portion 31 of the roll 30 has been exemplified. However, the communication portion 35 may be bent in a shape of the hiragana 'ku' (for example, at an obtuse angle) in the radial direction inside the body portion 31 of the roll 30 (for example, at the axial center of the roll 30).

In the above embodiment, the aspect has been exemplified in which the roll 30 includes the two communication portions 35a and 35b, and the two communication portions 35a and 35b are orthogonal to each other at the axial center of the roll 30. However, the two communication portions 35a and 35b may intersect at an acute angle at the axial center of the roll 30, or three or more communication portions 35 may intersect at an acute angle at the axial center of the roll 30.

The present invention and embodiments are summarized as follows.

A slit die head 20 according to a first aspect of the present invention is
a slit die head 20 configured to coat cross coating portions 71 and 74 extending in a cross direction B crossing a coating direction A by a coating liquid P discharged from a slit-shaped discharge port 24, the slit die head including:
a storage portion 22 that is formed inside the slit die head 20 and stores the coating liquid P; and
a roll 30 extending in the cross direction B, in which
the roll 30 includes:
   a body portion 31 rotatably disposed in the storage portion 22;
   a cross groove 36 formed on a body surface 33 of the body portion 31 and extending in the cross direction B and having a shape corresponding to the cross coating portions 71 and 74;
   an introduction port 34 that is formed in the body surface 33 and introduces the coating liquid P stored in the storage portion 22; and
   a communication portion 35 communicating between the cross groove 36 and the introduction port 34.

According to the above aspect, since the coating liquid P stored in the storage portion 22 is directly and smoothly supplied to the cross groove 36 formed on the body surface 33 of the roll 30 through the communication portion 35, the thickness unevenness in the cross coating portions 71 and 74 can be reduced.

In the slit die head 20 according to a second aspect, in the first aspect, the communication portion 35 is a through hole linearly extending in the radial direction of the body portion 31.

According to the above aspect, the pressure loss in the cross groove 36 can be reduced.

In the slit die head 20 according to a third aspect, in the first aspect, the roll 30 further includes a parallel groove 37 extending in parallel with the coating direction A.

According to the above aspect, the coating pattern 70 having a frame shape including the two cross coating portions 71 and 74 and the two parallel coating portions 72 and 73 can be coated.

In the slit die head 20 according to the fourth aspect, in the third aspect, the discharge port 24 is provided with a shim plate 40 having a merging portion 45 connecting the cross grooves 36 and the parallel grooves 37 separated from each other.

According to the above aspect, the coating liquid P from the cross groove flow path 42 and the coating liquid P from the parallel groove flow path 44 can merge to connect the end portions of the cross coating portions 71 and 74 and the end portions of the parallel coating portions 72 and 73.

In the slit die head 20 according to a fifth aspect, in the fourth aspect, a height of the merging portion 45 is 30% or less of a height of the shim plate 40.

According to the above aspect, it is possible to ensure the merging of the coating liquid P by the merging portion 45 and to prevent the coating liquid P from the cross groove flow path 42 and the coating liquid P from the parallel groove flow path 44 from interfering with each other.

In another aspect, the coating device 1 includes the slit die head 20 according to any one of the first to fifth aspects.

According to the coating device 1, since the coating liquid P stored in the storage portion 22 is directly and smoothly supplied to the cross groove 36 formed on the body surface 33 of the roll 30 through the communication portion 35, the thickness unevenness in the cross coating portions 71 and 74 can be reduced.

### REFERENCE SIGNS LIST

- 1: coating device
- 3: coating liquid supply device
- 4: coating liquid pipe
- 5: coating liquid supply valve
- 7: back roll
- 10: gas supply device
- 12: gas pipe
- 14: gas supply regulating valve
- 15: gas release valve
- 20: slit die head
- 21: die
- 21a: first die
- 21b: second die
- 22: storage portion
- 24: discharge port
- 30: roll
- 31: body portion
- 32: shaft portion
- 33: body surface
- 34: introduction port
- 34a: first introduction port
- 34b: second introduction port
- 35: communication portion
- 35a: first communication portion
- 35b: second communication portion
- 35g: wide communication portion
- 35h: narrow communication portion
- 36: cross groove
- 36a: first cross groove
- 36b: second cross groove
- 37: parallel groove
- 37a: first parallel groove
- 37b: second parallel groove
- 38: intermediate parallel groove
- 39: protruding groove
- 40: shim plate
- 41: plate-shaped body
- 42: cross groove flow path
- 43: partition wall
- 44: parallel groove flow path
- 45: merging portion
- 46: partition portion
- 47: gap holding portion
- 48: merging restricting portion
- 49: discharge flow path
- 50: seal shim
- 51: seal portion
- 52: sliding contact surface
- 61: first cross groove opening
- 62: first parallel groove opening
- 63: second cross groove opening
- 64: second parallel groove opening
- 70: coating pattern
- 71: front cross coating portion (cross coating portion)
- 72: left parallel coating portion (parallel coating portion)
- 73: right parallel coating portion (parallel coating portion)
- 74: rear cross coating portion (cross coating portion)
- 75: non-coating portion
- 76: intermediate cross coating portion (cross coating portion)
- 77: intermediate parallel coating portion (parallel coating portion)
- A: coating direction
- B: cross direction
- b1: first cross length
- B1: second cross length
- b2: first parallel length
- B2: second parallel length
- P: coating liquid

## Claims

1. A slit die head configured to coat a cross coating portion extending in a cross direction crossing a coating direction by a coating liquid discharged from a slit-shaped discharge port, the slit die head comprising:
a storage portion that is formed inside the slit die head and stores the coating liquid; and
a roll extending in the cross direction, wherein
the roll includes:
a body portion rotatably disposed in the storage portion;
a cross groove formed on a body surface of the body portion and extending in the cross direction and having a shape corresponding to the cross coating portion;
an introduction port that is formed on the body surface and introduces the coating liquid stored in the storage portion; and
a communication portion communicating between the cross groove and the introduction port.

2. The slit die head according to claim 1, wherein the communication portion is a through hole linearly extending in a radial direction of the body portion.

3. The slit die head according to claim 1, wherein the roll further includes a parallel groove extending in parallel with the coating direction.

4. The slit die head according to claim 3, wherein the discharge port is provided with a shim plate having a merging portion that merges the cross groove and the parallel groove separated from each other.

5. The slit die head according to claim 4, wherein a height of the merging portion is within 30% of a height of the shim plate.

6. A coating device comprising the slit die head according to any one of claims 1 to 5.
